# EUROPÄISCHE PATENTSCHRIFT

(11) **EP 1 243 107 B1**
(45) Veröffentlichungstag und Bekanntmachung des Hinweises auf die Patenterteilung: **07.06.2006**
(21) Anmeldenummer: 00987135.1
(22) Anmeldetag: 14.11.2000
(51) Int. Cl.: H04L 12/58, H04Q 7/22, H04L 29/06

(54) **VERFAHREN ZUR ÜBERTRAGUNG VON ELEKTRONISCHEN POSTNACHRICHTEN**
METHOD FOR TRANSMISSION OF AN ELECTRONIC POST MESSAGE
PROCEDE DE TRANSMISSION DE COURRIERS ELECTRONIQUES

(30) Priorität: 17.12.1999 DE 19961345
(43) Veröffentlichungstag der Anmeldung: 25.09.2002
(60) Teilanmeldung: 06110516.9
(73) Patentinhaber: ROBERT BOSCH GMBH, 70442 Stuttgart (DE)
(72) Erfinder: LAUMEN, Josef, 31141 Hildesheim (DE); SCHMIDT, Gunnar, 38304 Wolfenbuettel (DE)
(86) Internationale Anmeldenummer: PCT/DE2000/004025
(87) Internationale Veröffentlichungsnummer: WO 2001/045320

(56) Entgegenhaltungen:
- WO-A-99/52247
- "ETSI TS 100901 Digital cellular telecommunications system (Phase 2+); Technical realization of the Short Message Service (SMS); Point-to-Point (PP) (GSM 03.40 version 7.3.0 Release 1998)" ETSI TS, November 1999 (1999-11), XP002168377 in der Anmeldung erwähnt
- 'SMS E-Mail Parameters, T2(99)-1068 Change Request to 23.040' 3GPP SMG MEETING T2 NR. 7, ETSI SMG4, [Online] 22 November 1999, YSTAD, SWEDEN, Seiten 1 - 5 Gefunden im Internet: <URL:http://www.3gpp.org/ftp/tsg_t/WG2_Capa bility/TSGT2_07/Docs/T2-991068%20SMS%20e-ma il%20parameters.zip> [gefunden am 2004-09-23]

## Beschreibung

### Stand der Technik

Die Erfindung geht von einem Verfahren zur Übertragung von elektronischen Postnachrichten nach der Gattung des Hauptanspruchs aus.

Aus der Veröffentlichung "SMS-E-Mail Parameter", T2(99)-1068 Change Request to 23.040 ist bereits ein Verfahren zur Übertragung von Internet-E-Mails unter Verwendung des SMS-Kurznachrichtendienstes (Short Message Service) bekannt, wobei mit einer SMS-Kurznachricht in einem Telekommunikationsnetz eine Internet-E-Mail sowie Adress- und Identifikationsdaten in verschiedenen Kopfinformationen der SMS-Kurznachricht für die Übertragung der Internet-E-Mail übertragen werden.

Die WO 99/52247 beleuchtet allgemein das Problem, bei der Verwendung eines Kurznachrichtendienstes für verschiedene Dienste eine eigene Syntax der Kurznachricht für jeden dieser Dienste aufbauen zu müssen. Dazu wird als Lösung vorgeschlagen, mit Hilfe von definierten Zeigerfeldern auf den eigentlichen Inhalt der Kurznachrichten zugreifen zu können, wobei der eigentliche Inhalt der Kurznachrichten dann nicht mehr mit der entsprechenden Syntax aufgebaut sein muss.

Aus den Veröffentlichungen "Technical realisation ofthe Short Message Service (SMS); Point-to-Point (PP)", GSM 03.40 V7.1.0 (1998-11) und 3G 23.040 V3.2.0 (1999-10) ist bereits ein Verfahren zur Übertragung von Internet-E-Mails unter Verwendung des SMS-Kurznachrichten-Dienstes (Short Message Service) bekannt, wobei mit einer SMS-Kurznachricht in einem Telekommunikationsnetz eine Internet-E-Mail sowie Adress- und Identifikationsdaten für die Übertragung der Internet-E-Mail im Internet übertragen werden. Der Standard gemäß den genannten Veröffentlichungen sieht die Möglichkeit vor, über den Kurznachrichtendienst SMS Internet E-Mails zu versenden und zu empfangen. Hierzu muss beim Versenden ein so genannter Signalisierungseintrag PID (Protocol Identifier) in einer Kopfinformation der SMS-Kurznachricht entsprechend eingestellt werden, um auf die mit der Kurznachricht übertragene Internet-E-Mail hinzuweisen. Der Datenteil der SMS-Kurznachricht beginnt dabei mit der Zieladresse für die Internet-E-Mail. Beim Empfangen von Internet-E-Mails über den SMS-Kurznachrichtendienst ist die Zieladresse von einer Netzwerkeinheit durch die Quelladresse des Absenders ersetzt worden. Die Trennung zwischen Internet-E-Mail Ziel- oder Quelladresse und der eigentlichen Internet-E-Mail in der SMS-Kurznachricht ist einfach ein Leerzeichen.

Optional unterstützt der Standard gemäß den genannten Veröffentlichungen die Angabe von mehreren Zieladressen, die durch Kommata getrennt werden müssen, sowie die Datenfelder "Subject" zur Angabe des Titels der Internet-E-Mail und "Real Name" zur Angabe des eigentlichen Namens des Absenders. Als Trennungszeichen zwischen diesen Datenfeldern ist dabei vorgesehen, das Datenfeld "Subject" in Klammern zu setzen oder durch zwei vorangestellte Sonderzeichen, wie beispielsweise "##" zu kennzeichnen. Das Datenfeld "Real Name" wird durch ein Sonderzeichen, beispielsweise "#" gekennzeichnet.

### Vorteile der Erfindung

Das erfindungsgemäße Verfahren zur Übertragung von elektronischen Postnachrichten mit den Merkmalen des Hauptanspruchs hat demgegenüber den Vorteil, daß mit der Kurznachricht eine erste Kopfinformation mit einer Signalisierung mindestens eines Datenfeldes übertragen wird, das die Adreß- und/oder Identifikationsdaten umfassen, daß eine zweite Kopfinformation mit der Kurznachricht übertragen wird, die auf das Vorhandensein der ersten Kopfinformation hinweist, und daß das mindestens eine Datenfeld innerhalb eines Datenteils der Kurznachricht außerhalb jeder Kopfinformation übertragen werden. Auf diese Weise kann ein erster Diensteanbieter des ersten Kommunikationsnetzes in Abhängigkeit einer Auswertung der zweiten Kopfinformation die Kurznachricht an einen zweiten Diensteanbieter des zweiten Kommunikationsnetzes weiterleiten, der dann anhand der ersten Kopfinformation eine weitere Auswertung der Kurznachricht zur Extraktion der elektronischen Postnachricht aus der Kurznachricht und zur Weiterleitung der elektronischen Postnachricht über das zweite Kommunikationsnetz vornehmen kann. Es ist somit nicht erforderlich, daß der erste Diensteanbieter des ersten Kommunikationsnetzes gleichzeitig Diensteanbieter des zweiten Kommunikationsnetzes ist.

Mittels der ersten Kopfinformation kann außerdem auf eine spezielle Form der Adressierung der elektronischen Postnachricht hingewiesen werden, die bei der Extraktion der elektronischen Postnachricht durch den zweiten Diensteanbieter berücksichtigt werden kann. Die Form der Adressierung läßt sich somit flexibel wählen. Voraussetzung ist lediglich, daß der zweite Diensteanbieter die jeweils angegebene Form der Adressierung der elektronischen Postnachricht kennt und somit für die Extraktion und Weiterleitung der elektronischen Postnachricht auswerten kann.

Durch die in den Unteransprüchen aufgeführten Maßnahmen sind vorteilhafte Weiterbildungen und Verbesserungen des im Hauptanspruch angegebenen Verfahrens möglich.

Besonders vorteilhaft ist es, daß das mindestens eine Datenfeld durch ein Schlüsselwort für die Übertragung in der ersten Kopfinformation gekennzeichnet wird. Auf diese Weise lassen sich mehrere Datenfelder mit geringem Aufwand eindeutig unterscheiden.

Ein weiterer Vorteil besteht darin, daß das Schlüsselwort codiert übertragen wird. Auf diese Weise wird die Beeinträchtigung der Datenkapazität der Kurznachricht durch die Übertragung eines oder mehrerer Schlüsselwörter auf ein Minimum reduziert.

Besonders vorteilhaft ist es, daß mit der ersten Kopfinformation ein Kennzeichnungsdatenfeld übertragen wird, das die Form der Adreß- und/oder Identifikationsdaten angibt. Auf diese Weise wird eine fehlerfreie Auswertung des mindestens einen Datenfeldes im zweiten Diensteanbieter gewährleistet, so daß die in der Kurznachricht enthaltene elektronische Postnachricht an den oder die richtigen Empfänger im zweiten Kommunikationsnetz übertragen werden kann.

Ein weiterer Vorteil besteht darin, daß mindestens eine dritte Kopfinformation mit der Kurznachricht übertragen wird, die die elektronische Postnachricht als Teil einer mittels Übertragung mehrerer Kurznachrichten verketteten gesamten elektronischen Postnachricht kennzeichnet. Auf diese Weise ist es insbesondere bei auf eine vorgegebene Datenmenge beschränkten Kurznachrichten möglich, dennoch eine die vorgegebene Datenmenge überschreitende elektronische Postnachricht durch Verkettung mehrerer Kurznachrichten im ersten Kommunikationsnetz zu versenden, wobei die elektronischen Postnachrichten der über die mindestens eine dritte Kopfinformation miteinander verketteten Kurznachrichten im zweiten Diensteanbieter zu einer gesamten elektronischen Postnachricht zusammengefügt und an mindestens eine in einem Datenfeld angegebene zweite Zieladresse versendet werden können.

### Zeichnung

Ausführungsbeispiele der Erfindung sind in der Zeichnung dargestellt und in der nachfolgenden Beschreibung näher erläutert. Es zeigen Figur 1 eine Übertragungsstrecke von einem Sender zu einem Empfänger, Figur 2 ein erstes Beispiel für einen schematischen Aufbau einer Kurznachricht mit integrierter elektronischer Postnachricht und Figur 3 ein zweites Beispiel für einen schematischen Aufbau einer Kurznachricht mit integrierter elektronischer Postnachricht.

### Beschreibung der Ausführungsbeispiele

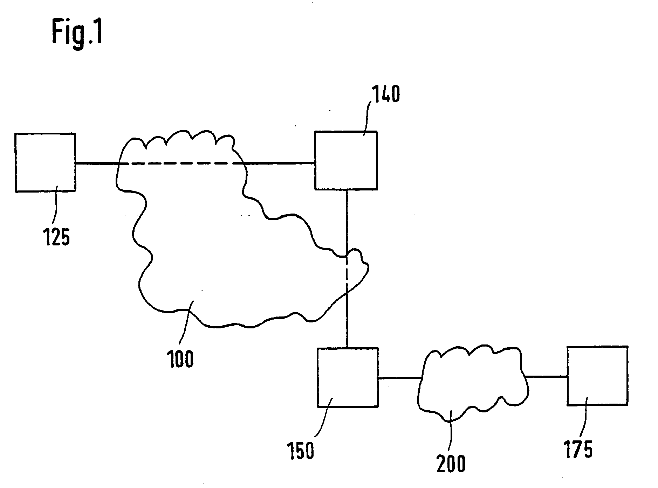

In Figur 1 kennzeichnet 125 einen Sender, der eine Kurznachricht mit integrierter elektronischer Postnachricht an einen ersten Diensteanbieter 140 über ein erstes Kommunikationsnetz 100 überträgt. Der erste Diensteanbieter 140 leitet die Kurznachricht über das erste Kommunikationsnetz 100 an einen zweiten Diensteanbieter 150 eines zweiten Kommunikationsnetzes 200 weiter. Der zweite Diensteanbieter 150 extrahiert aus der Kurznachricht die elektronische Postnachricht und leitet sie über das zweite Kommunikationsnetz 200 an einen Empfänger 175 weiter.

Der erste Diensteanbieter 140 und der zweite Diensteanbieter 150 sind hier als zwei getrennte Einheiten ausgeführt. Sie können jedoch auch in eine gemeinsame Einheit integriert sein.

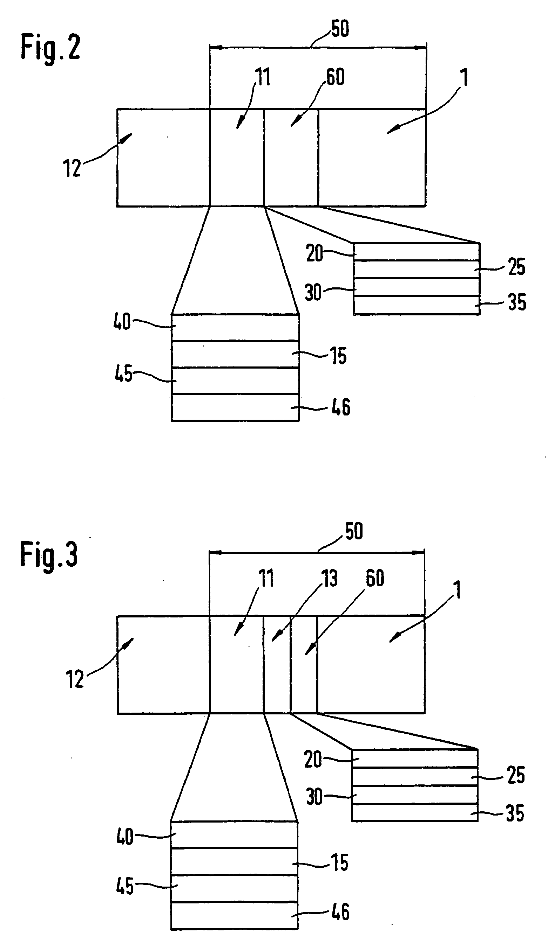

In der Figur 2 kennzeichnet 5 eine Kurznachricht. Die Kurznachricht 5 wird vom Sender 125 des ersten Kommunikationsnetzes 100 erzeugt und wie beschrieben über den ersten Diensteanbieter 140 des ersten Kommunikationsnetzes 100 an den zweiten Diensteanbieter 150 des zweiten Kommunikationsnetzes 200 unter Verwendung des ersten Kommunikationsnetzes 100 übertragen. Für die Übertragung solcher Kurznachrichten 5 wird dazu im ersten Kommunikationsnetz 100 ein sogenannter Kurznachrichtendienst eingerichtet. Ein solcher Kurznachrichtendienst existiert beispielsweise in einem als Mobilfunknetz ausgebildeten ersten Kommunikationsnetz 100. Dabei kann es sich bei einem solchen Mobilfunknetz beispielsweise um ein Mobilfunknetz nach dem GSM-Standard (Global System for Mobile Communications) oder nach dem UMTS-Standard (Universal Mobile Telecommunications System) handeln. Beim GSM-Mobilfunknetz ist der sogenannte SMS-Kurznachrichtendienst (Short Message Service) spezifiziert, der die Versendung von SMS-Kurznachrichten zwischen einem Sender und einem Empfänger zur Verfügung stellt, wobei die SMS-Kurznachrichten auf Textnachrichten einer maximalen Textlänge von derzeit 160 Zeichen beschränkt sind. Sollen größere Textnachrichten übertragen werden, so bietet der SMS-Kurznachrichtendienst die Möglichkeit einer Verkettung mehrerer SMS-Kurznachrichten, d.h. die zu übertragende Textnachricht wird auf mehrere SMS-Kurznachrichten verteilt.

Die in der Figur 2 dargestellte Kurznachricht 5 umfaßt grundsätzlich eine zweite Kopfinformation 12 und ein Datenteil 50. Die zweite Kopfinformation 12 umfaßt Signalisierungseinträge sowie eine erste Zieladresse für die zu sendende Kurznachricht 5 bzw. eine Quelladresse für die zu empfangende Kurznachricht 5. Die erste Zieladresse kennzeichnet den ersten Diensteanbieter 140 der Kurznachricht 5 im ersten Kommunikationsnetz 100 und die Quelladresse kennzeichnet den Sender 125 der Kurznachricht 5 im ersten Kommunikationsnetz 100. Der Datenteil 50 umfaßt die eigentlich zu übermittelnde Nachricht und damit die sogenannten Nutzdaten. Beim SMS-Kurznachrichtendienst werden dabei die Quelladresse bzw. die erste Zieladresse gemäß den Veröffentlichungen "Technical Realisation of the Short Message Service (SMS); Point-to-Point (PP)", GSM 03.40 V7.1.0 (1998-11) und "Technical Realisation of the Short Message Service (SMS); Point-to-Point (PP)", 3G 23.040 V3.2.0 (1999-10) über eine sogenannte MSISDN-Nummer (Mobile Subscriber Integrated Services Digital Network) identifiziert. Bei der Übertragung der Kurznachricht 5 im ersten Kommunikationsnetz 100 adressiert eine in Figur 1 nicht dargestellte Netzwerkeinheit des ersten Kommunikationsnetzes 100 den ersten Diensteanbieter 140 der Kurznachricht 5 anhand der ersten Zieladresse und ersetzt diese durch die Quelladresse des Senders 125. Standardgemäß enthält dabei die zweite Kopfinformation 12 also genau eine Quelladresse oder genau eine erste Zieladresse.

Die Kurznachricht 5 umfaßt gemäß der Figur 2 eine erste Kopfinformation 11, die im Datenteil 50 der Kurznachricht 5 angeordnet ist. Die erste Kopfinformation 11 wird beim SMS-Kurznachrichtendienst als Benutzerdatenkopfinformation oder "User Data Header" bezeichnet.

Das Vorhandensein der ersten Kopfinformation 11 im Datenteil 50 wird durch einen entsprechenden Signalisierungseintrag in der zweiten Kopfinformation 12 angezeigt. Beim SMS-Kurznachrichtendienst sind verschiedene Typen von "User Data Header" gemäß den genannten Veröffentlichungen "Technical Realisation of the Short Message Service (SMS); Point-to-Point (PP)" spezifiziert. Sie werden dabei durch ein Kennzeichnungsdatenfeld 15 in der ersten Kopfinformation 11 gemäß der Figur 2 voneinander unterschieden, wobei die Figur 2 den Aufbau der ersten Kopfinformation 11 detailliert darstellt.

Im Datenteil 50 der Kurznachricht 5 kann nun eine elektronische Postnachricht 1 übertragen werden. Der Signalisierungseintrag in der zweiten Kopfinformation 12 gibt dabei zusätzlich an, daß mit der Kurznachricht 5 eine solche elektronische Postnachricht übertragen wird. Dies wird vom ersten Diensteanbieter 140 nach Auswertung der zweiten Kopfinformation 12 erkannt. Er leitet daher die Kurznachricht an den zweiten Diensteanbieter 150 wie beschrieben weiter, da dieser als Diensteanbieter des zweiten Kommunikationsnetzes 200, das für die Übertragung solcher elektronischer Postnachrichten vorgesehen ist, fungiert und die Übertragung der elektronischen Postnachricht 1 im zweiten Kommunikationsnetz 200 somit veranlassen kann. Der erste Diensteanbieter 140 muß somit nicht gleichzeitig Diensteanbieter des zweiten Kommunikationsnetzes 200 geschweige denn Teilnehmer desselben sein. Die Kurznachricht 5 mit der elektronischen Postnachricht 1 wird also wie beschrieben zum zweiten Diensteanbieter 150 des zweiten Kommunikationsnetzes 200 über das erste Kommunikationsnetz 100 übertragen, wobei der zweite Diensteanbieter 150 auch Teilnehmer des zweiten Kommunikationsnetzes 200 ist. Die elektronische Postnachricht 1 soll nun vom zweiten Diensteanbieter 150 an den Empfänger 175 des zweiten Kommunikationsnetzes 200 übertragen werden. Dabei kann es sich bei dem zweiten Kommunikationsnetz 200 beispielsweise um das Internet handeln, wobei die elektronische Postnachricht 1 dann beispielsweise eine Internet-E-Mail darstellt.

Mit dem Datenteil 50 werden nun mehrere Datenfelder 20, 25, 30, 35 außerhalb jeglicher Kopfinformation übertragen, die Adreß- und Identifikationsdaten für die Übertragung der elektronischen Postnachricht 1 im zweiten Kommunikationsnetz 200 umfassen. Nach Auswertung dieser Adreß- und Identifikationsdaten im zweiten Diensteanbieter 150 kann die elektronische Postnachricht 1 an den Empfänger 175 des zweiten Kommunikationsnetzes 200 weitergeleitet werden. Dazu muß jedoch dem zweiten Diensteanbieter 150 der Kurznachricht 5 mitgeteilt werden, wie die Datenfelder 20, 25, 30, 35 aufgebaut sind bzw. ob solche Datenfelder 20, 25, 30, 35 im Datenteil 50 überhaupt vorhanden sind. Dies geschieht anhand des Kennzeichnungsdatenfeldes 15 in der ersten Kopfinformation 11. Dort gibt ein sogenannter Identifikator an, in welcher Weise die Adreß- und Identifikationsdaten im Datenteil 50 vorliegen und signalisiert somit außerdem das Vorhandensein der Datenfelder 20, 25, 30, 35 überhaupt.

Beispielsweise kann der Identifikator angeben, dass die Datenfelder 20,25,30,35 im Datenteil 50 eine aus der Veröffentlichung "Standard for the Format of ARPA Internet Text Messages" IETF, RFC 822 bekannte Adressierung und Identifikation der elektronischen Postnachricht 1 umfassen. Gemäß der Figur 2 sind beispielhaft die Datenfelder 20, 25, 30, 35 für eine RFC 822-Adressierung gemäß der genannten Veröffentlichung dargestellt.

In der ersten Kopfinformation 11 ist ein erstes Längendatenfeld 40 vorangestellt, das die Länge UDHL (User Data Header Length) der ersten Kopfinformation 11 angibt. Dem ersten Längendatenfeld 40 folgt dann das bereits beschriebene Kennzeichnungsdatenfeld 15 mit dem Identifikator IEI (Information Element Identifier), der in diesem Fall angibt, dass die Datenfelder 20, 25, 30, 35 eine RFC 822-Adressierung darstellen. Das Kennzeichnungsdatenfeld 15 wird von einem zweiten Längendatenfeld 45 gefolgt, dass die Länge IEIDL (Information Element Identifier Data Length) eines dritten Längendatenfeldes 46 angibt. Das dritte Längendatenfeld 46 gibt die Länge der Datenfelder 20, 25, 30, 35 im Datenteil 50 an. Die Datenfelder 20; 25, 30, 35 selbst sind dann im Datenteil 50 außerhalb jeglicher Kopfinformation wie beschrieben angeordnet. Die Datenfelder 20, 25, 30, 35 werden dabei im Datenteil 50 der elektronischen Postnachricht 1 vorzugsweise unmittelbar vorangestellt übertragen. Mittels der Längenangabe im dritten Längendatenfeld 46 können dann die Datenfelder 20, 25, 30, 35 eindeutig von der elektronischen Postnachricht 1 im Datenteil 50 getrennt werden. Diese Trennung kann zusätzlich oder alternativ durch Verwendung eines für diesen Zweck vorgegebenen speziellen Trennungszeichens unterstützt werden, vorausgesetzt dieses Trennungszeichen wird sonst nicht in den Datenfeldern 20, 25, 30, 35 und der elektronischen Postnachricht 1 verwendet. Dazu ist in Figur 2 ein Bereich 60 nach der ersten Kopfinformation 11 und der elektronischen Postnachricht 1 im Datenteil 50 dargestellt, in dem die Datenfelder 20, 25, 30, 35 angeordnet sind. Die Datenfelder 20, 25, 30, 35 werden durch Schlüsselwörter voneinander unterschieden, wobei jedem Datenfeld 20, 25, 30, 35 ein Schlüsselwort zugeordnet ist. Diese Schlüsselworte sind dem zweiten Diensteanbieter 150 bekannt. Da aufgrund der vorgegebenen Schlüsselwörter eine eindeutige Identifizierung der Datenfelder 20, 25, 30, 35 gegeben ist, können je nach gewünschter Anwendung in ihrer Art und Anzahl verschiedene Datenfelder im Datenteil 50 angeordnet sein. Gemäß der Figur 2 sind vier Datenfelder 20, 25, 30, 35 vorgesehen. Es könnten jedoch auch mehr oder weniger sein. Ein erstes Datenfeld 20 ist dabei beispielhaft als Zieladreßdatenfeld ausgebildet, das eine zweite Zieladresse der elektronischen Postnachricht 1 umfaßt und damit den Empfänger 175 der elektronischen Postnachricht 1 im zweiten Kommunikationsnetz 200 kennzeichnet. Das Zieladreßdatenfeld 20 ist daher für die Weiterleitung der elektronischen Postnachricht 1 im zweiten Kommunikationsnetz 200 unerläßlich, es kann jedoch aufgrund des zugeordneten Schlüsselwortes an beliebiger Stelle im Bereich 60 der Datenfelder 20, 25, 30, 35 angeordnet sein, da es anhand des Schlüsselwortes vom zweiten Diensteanbieter 150 eindeutig identifiziert wird. Entsprechendes gilt für alle anderen Datenfelder. Ein zweites Datenfeld 25 im Bereich 60 der Datenfelder 20, 25, 30, 35 kann dabei als Quelladreßdatenfeld ausgebildet sein und die Quelladresse der elektronischen Postnachricht 1 umfassen, so daß beim Empfänger 175 der elektronischen Postnachricht 1 im zweiten Kommunikationsnetz 200 der Sender 125 der elektronischen Postnachricht 1 identifizierbar ist.

Ein drittes Datenfeld 30 im Bereich 60 der Datenfelder 20, 25, 30, 35 kann als Bezeichnungsdatenfeld ausgebildet sein, das eine Bezeichnung oder einen Titel der elektronischen Postnachricht 1 umfaßt.

Ein viertes Datenfeld 35 im Bereich 60 der Datenfelder 20, 25, 30, 35 kann als Namensdatenfeld ausgebildet sein, das den Namen des Senders 125 der elektronischen Postnachricht 1 umfaßt, jedoch nicht in Form der Quelladresse, sondern beispielsweise in Form eines Vor- und eines Nachnamens, also als persönlicher Name.

Die Zuordnung der Datenfelder zu den Schlüsselworten kann beispielsweise wie folgt aussehen: Dem Zieladreßdatenfeld ist das Schlüsselwort "To" zugeordnet. Dem Quelladreßdatenfeld 25 ist das Schlüsselwort "From" zugeordnet. Dem Bezeichnungsdatenfeld 30 ist das Schlüsselwort "Subject" zugeordnet. Das Namensdatenfeld 35 soll in diesem Beispiel nicht verwendet werden.

Im folgenden wird ein Beispiel für den Aufbau der Datenfelder 20, 25, 30 im Bereich 60 beschrieben. Dabei enthält zunächst die zweite Kopfinformation 12 den Signalisierungseintrag TP-UDHI (Transfer Protocol-User Data Header Identification), der angibt, ob die erste Kopfinformation 11 und damit eine elektronische Postnachricht 1 in der Kurznachricht 5 vorliegt. Ist dies der Fall, so ist TP-UDHI auf 1 gesetzt, andernfalls ist TP-UDHI auf 0 gesetzt. Die erste Kopfinformation 11 kann dann beispielsweise wie folgt aufgebaut sein: Im ersten Längendatenfeld 40 ist die Länge UDHL der ersten Kopfinformation 11 auf 3 im Hexadezimalsystem gesetzt. Im Kennzeichnungsdatenfeld 15 ist der Identifikator IEI auf 20 im Hexadezimalsystem gesetzt und signalisiert durch diesen Wert das Vorhandensein von Datenfeldern 20, 25, 30 im Bereich 60 und die beschriebene RFC 822-Adreßierung gemäß einer entsprechenden Zuordnungstabelle. Im zweiten Längendatenfeld 45 ist die Länge IEIDL auf Eins im Hexadezimalsystem gesetzt und gibt somit an, daß die Länge des dritten Längendatenfeldes 46 ein Zeichen und damit ein Byte und damit 8 Bit beträgt, so daß das dritte Längendatenfeld 46 maximal 255 Zeichen für die Länge der Datenfelder 20, 25, 30 angeben kann. Die Länge der Datenfelder 20, 25, 30 wird dann bei diesem Beispiel im dritten Längendatenfeld 46 auf den Wert 37 im Hexadezimalsystem gesetzt. Für den Fall, daß die Länge der Datenfelder 20, 25, 30 größer als 255 ist, sind mindestens 2 Bytes für die Längenangabe im dritten Längendatenfeld 46 erforderlich. Entsprechend ist dann der Eintrag im zweiten Längendatenfeld 45 Zwei oder größer zu setzen. Alternativ kann auf das dritte Längendatenfeld 46 verzichtet werden, wenn zwischen dem Bereich 60 mit den Datenfeldern 20, 25, 30 und der elektronischen Postnachricht 1 ein Trennungszeichen vereinbart ist. Dies kann entsprechend der RFC 822 Adressierung beispielsweise eine Leerzeile sein. Ist das dritte Längendatenfeld 46 nicht erforderlich, dann wird das zweite Längendatenfeld 45 entsprechend auf Null gesetzt.

Im Zieladreßdatenfeld 20 referenziert das Schlüsselwort "To" mit folgender Zeichenkette aus 27 Zeichen eine als Internet-Adresse ausgebildete zweite Zieladresse für die in diesem Beispiel als Internet-E-Mail ausgebildete elektronische Postnachricht 1:
To=Gunnar.Schmidt@Bosch.com

Im Quelladreßdatenfeld 25 referenziert das Schlüsselwort "From" eine ebenfalls als Internet-Adresse ausgebildete Quelladresse zur Identifikation des Senders 125 der elektronischen Postnachricht 1, wobei im Quelladreßdatenfeld 25 folgende Zeichenkette aus 23 Zeichen gebildet wird:
From=+49xxxyyyyy@zzz.de

Die Quelladresse ist dabei offensichtlich als eine Telefonnummer umfassende Internet-E-Mail-Adresse ausgebildet und nicht personalisiert. Eine personalisierte Identifikation des Senders 125 der elektronischen Postnachricht 1 ist unter Verwendung des Namensdatenfeldes 35 wie beschrieben möglich, aber in diesem Beispiel nicht vorgesehen.

Im Bezeichnungsdatenfeld 30 ist in diesem Beispiel eine Zeichenkette aus 12 Zeichen vorgesehen, bei der das Schlüsselwort "Subject" die Bezeichnung der elektronischen Postnachricht 1 wie folgt referenziert:
Subject=Test

Weitere Datenfelder sind in diesem Beispiel nicht im Bereich 60 vorgesehen. Insgesamt umfassen in diesem Beispiel die drei verwendeten Datenfelder 20, 25, 30 zweiundsechzig Zeichen, die beispielsweise jeweils mit sieben Bit binär codiert werden, so daß für die Codierung insgesamt 55 Byte erforderlich sind. Dabei entspricht die Zahl 55 im Zehnersystem der Zahl 37 im Hexadezimalsystem und damit dem im dritten Längendatenfeld 46 vorgesehenen Wert.

Da sich die Datenfelder 20, 25, 30 mit den Adreß- und Identifikationsdaten im eigentlichen Nachrichtenteil der Kurznachricht 5 befinden, ist beispielsweise eine 7 bit Kodierung der Zeichen gemäß der Veröffentlichung "Alphabets and language-specific information", GSM 03.38 bzw. 3GPP 23.038 anwendbar.

Im beschriebenen Beispiel werden die einzelnen Datenfelder 20, 25, 30 nicht nur über die Schlüsselwörter eindeutig gekennzeichnet, sondern auch voneinander getrennt. Das bedeutet, daß der Inhalt eines jeden Datenfeldes 20, 25, 30 keine Schlüsselwörter enthalten darf. Diese Forderung wird jedoch gegenstandslos, wenn jedes Datenfeld 20, 25, 30 mit einem Trennungszeichen abgeschlossen wird und vereinbart ist, daß das das jeweilige Datenfeld kennzeichnende Schlüsselwort an den Anfang dieses Datenfeldes gestellt werden muß, so daß nach einem Trennungszeichen das erste nachfolgende Schlüsselwort ein neu beginnendes Datenfeld kennzeichnet und alle nachfolgenden Schlüsselwörter bis zum nächsten Trennungszeichen nicht als Kennzeichnung eines neuen Datenfeldes interpretiert werden. Für das Zieladreßdatenfeld 20 könnte dann die Zeichenfolge ausgehend von obigem Beispiel wie folgt ausgebildet sein:
To=Gunnar.Schmidt@Bosch.com<CR>

Beispielhaft wurde hier als Trennungszeichen <CR>, d.h. Wagenrücklauf oder "Carriage Return" gewählt. Dieses verlängert die Zeichenfolge auf insgesamt 28 Zeichen.

Ebenfalls alternativ zum beschriebenen Beispiel können die Zeichen in acht Bit binär codiert werden. Damit vergrößert sich der mögliche Zeichenvorrat, die mögliche Anzahl von Zeichen für die elektronische Postnachricht 1 wird dadurch jedoch weiter verringert.

Im beschriebenen Beispiel bleiben für die eigentliche elektronische Postnachricht 1 im Datenteil 50 der Kurznachricht 5 weniger als 100 Zeichen übrig, wenn von einer Kurznachricht 5 nach SMS-Standard und der derzeitigen Begrenzung auf 160 Zeichen pro Kurznachricht in diesem SMS-Standard ausgegangen wird.

Es ist daher vorteilhaft, die Schlüsselwörter der beschriebenen RFC 822-Adressierung beispielsweise mit sieben Bit binär zu codieren, um Zeichen einzusparen. Dies kann über eine vorgegebene Referenztabelle erfolgen, die im Sender 125 und im zweiten Diensteanbieter 150 bekannt ist und beispielsweise folgendermaßen aussieht:

| Schlüsselwort | Binärcode (7 Bit) |
|---|---|
| To: | <0000000> |
| From: | <0000001> |
| Cc: | <0000010> |
| Bcc: | <0000011> |
| Subject: | <0000100> |
| ... | ... |

Neben den bereits beschriebenen Schlüselwörtern "To", "From" "Subject" enthält die Tabelle als weitere Schlüsselwörter: "Cc" und "Bcc". Außerdem ist in der Tabelle angedeutet, daß außer den beschriebenen noch weitere Schlüsselwörter vorgesehen sein können. Für jedes im Bereich 60 verwendete Schlüsselwort ist dabei in der beschriebenen Weise ein Datenfeld im Bereich 60 vorgesehen. Die Schlüsselwörter "Cc" und "Bcc" kennzeichnen weitere Zieladressen, an die die elektronische Postnachricht 1 im zweiten Kommunikationsnetz 200 zusätzlich zur unter dem Schlüsselwort "To" angegebenen zweiten Zieladresse übertragen werden soll.

Alternativ zum beschriebenen Beispiel können die Schlüsselwörter auch mit acht Bit binär kodiert werden.

Gemäß dem oben beschriebenen Beispiel würde sich durch die Codierung der Schlüsselwörter dann im Bereich 60 folgendes ergeben:
Im ersten Längendatenfeld 40 würde UDHL nach wie vor auf 3 im Hexadezimalsystem gesetzt werden. Im Kennzeichnungsdatenfeld 15 würde IEI nach wie vor auf 20 im Hexadezimalsystem gesetzt werden, um die RFC 822-Adreßierung nach wie vor zu referenzieren. Im zweiten Längendatenfeld 45 würde IEIDL nach wie vor auf Eins im Hexadezimalsystem gesetzt werden. Die Länge der Datenfelder 20, 25, 30 im Bereich 60 wird nun im dritten Längendatenfeld 46 auf 2b im Hexadezimalsystem gesetzt. Durch die Codierung des Schlüsselwortes "To" gemäß der Tabelle mit dem Zeichen <0000000> würde die Zeichenfolge im Zieladreßdatenfeld 20 nunmehr 25 Zeichen umfassen und wie folgt aussehen:
   <0000000>Gunnar.Schmidt@Bosch.com
Durch die Codierung des Schlüsselwortes "From" mit dem Zeichen <0000001> gemäß der Tabelle würde das Quelladreßdatenfeld 25 nunmehr eine Zeichenfolge mit 19 Zeichen umfassen und wie folgt aussehen:
   <0000001>+41xxxyyyyy@zzz.de
Durch die Codierung des Schlüsselwortes "Subject" durch das Zeichen <0000100> gemäß der Tabelle würde das Bezeichnungsdatenfeld 30 nunmehr eine Zeichenfolge mit fünf Zeichen umfassen und wie folgt aussehen:
   <0000100>Test

Somit ergeben sich für die verwendeten Datenfelder 20, 25, 30 nunmehr 49 Zeichen, die bei Binärcodierung mit jeweils 7 Bit 43 Bytes beanspruchen würden, wobei die Zahl 43 im Zehnersystem der Zahl 2b im Hexadezimalsystem und damit dem im dritten Längendatenfeld 46 vorgesehenen Wert entspricht.

Auf diese Weise können Zeichen eingespart werden, die der elektronischen Postnachricht 1 zur Verfügung gestellt werden können.

Der Wert 3 für UDHL gibt an, daß für die erste Kopfinformation 11 im Datenteil 50, also für das erste Längendatenfeld 40, das zweite Längendatenfeld 45, das dritte Längendatenfeld 46 und das Kennzeichnungsdatenfeld 15 insgesamt maximal 3Bytes, also 24 Binärstellen zur Verfügung stehen.

Es kann nun vorgesehen sein, daß neben der ersten Kopfinformation 11 mindestens eine dritte Kopfinformation 13 mit der Kurznachricht 5 übertragen wird, die die elektronische Postnachricht 1 als Teil einer mittels Übertragung mehrerer Kurznachrichten verketteten gesamten elektronischen Postnachricht 1 kennzeichnet. Die Reihenfolge zwischen der ersten Kopfinformation 11 und der dritten Kopfinformation 13 kann auch vertauscht sein. Lediglich die zweite Kopfinformation 12 sollte am Anfang der Kurznachricht 5 stehen. Auch weitere Kopfinformationen können der Kurznachricht 5 hinzugefügt werden in beliebiger Reihenfolge mit der ersten Kopfnachricht 11 und gegebenenfalls der dritten Kopfnachricht 13, wobei die zweite Kopfinformation 12 immer am Anfang der Kurznachricht 5 stehen muß.

Die dritte Kopfinformation 13 ist optional vorgesehen. Figur 3 zeigt ausgehend vom Beispiel nach Figur 2 eine Kurznachricht 5 mit integrierter dritter Kopfinformation 13. Dabei kennzeichnen gleiche Bezugszeichen gleiche Elemente wie in Figur 2. Der Aufbau der Kurznachricht gemäß Figur 3 entspricht dabei dem für das Beispiel nach Figur 2 beschriebenen Aufbau mit dem Unterschied, daß die dritte Kopfinformation 13 im Beispiel nach Figur 3 nun zusätzlich in der Kurznachricht 5 zwischen der ersten Kopfinformation 11 und dem Bereich 60 angeordnet ist. Die dritte Kopfinformation 13 unterscheidet sich von der ersten Kopfinformation 11 auf jeden Fall durch den Identifikator im Kennzeichnungsdatenfeld 15. Anhand dieses Identifikators kann der zweite Diensteanbieter 150 die erste Kopfinformation 11 von der dritten Kopfinformation 13 unterscheiden.

Die dritte Kopfinformation 13 muß außerdem eine Kennung enthalten, die die gesamte elektronische Postnachricht kennzeichnet. Im zweiten Diensteanbieter 150 werden dann sämtliche mittels Kurznachrichten eingegangene elektronische Postnachrichten miteinander zu der gesamten elektronischen Postnachricht verkettet, die durch die Kennung dieser gesamten elektronischen Postnachricht referenziert sind und in dieser Form als verkettete gesamte elektronische Postnachricht zum gemäß der zweiten Zieladresse im Zieladressdatenfeld 20 adressierten Empfänger 175 im zweiten Kommunikationsnetz 200 übertragen. Dabei kann die dritte Kopfinformation 13 auch eine Reihenfolgennummer enthalten, die angibt, an welcher Stelle die elektronische Postnachricht 1 der jeweiligen Kurznachricht 5 in der verketteten gesamten elektronischen Postnachricht steht, so daß mehrere auf diese Weise gekennzeichnete elektronische Postnachrichten im zweiten Diensteanbieter 150 in der richtigen Reihenfolge miteinander verkettet werden können. Dabei kann es auch vorgesehen sein, für die Kennzeichnung der gesamten elektronischen Postnachricht und für die Kennzeichnung der Reihenfolgennummer der jeweiligen elektronischen Postnachricht jeweils eine eigene Kopfinformation in der Kurznachricht 5 vorzusehen und mit einem entsprechenden Identifikator im Kennzeichnungsdatenfeld 15 voneinander zu unterscheiden.

Durch Auswertung der Datenfelder 20, 25, 30, 35 ist der zweite Diensteanbieter 150 in der Lage, aus der Kurznachricht 5 die elektronische Postnachricht 1 aus dem Datenteil 50 zu extrahieren, da die erste Kopfinformation 11 und gegebenenfalls weitere Kopfinformationen des Datenteils 50, wie beispielsweise auch die dritte Kopfinformation 13 und schließlich auch der Bereich 60 den Nutzdaten im Datenteil 50 stets vorangestellt werden und jeweils mindestens ein Längendatenfeld aufweisen, aus dem ihre Länge und im Falle der ersten Kopfinformation 11 auch die Länge des Bereichs 60 ermittelt werden kann. Es kann auch vorgesehen sein, daß nur in der ersten Kopfinformation 11 mittels Längendatenfeldern Längenangaben über sämtliche im Datenteil 50 vorhandenen Kopfinformationen 11, 13 und Datenfelder 20, 25, 30, 35 gemacht werden, so daß entsprechende Längendatenfelder in den weiteren Kopfinformationen des Datenteils 50 und dem Bereich 60 nicht erforderlich sind. Dazu kann es vorgesehen sein, daß das erste Längendatenfeld 40 der ersten Kopfinformation 11 die Gesamtlänge aller Kopfinformationen 11, 13 des Datenteils 50 angibt. Aus dem Bereich 60 mit den Datenfeldern 20, 25, 30, 35 werden dann außerdem die für die Adressierung und Identifikation der elektronischen Postnachricht 1 erforderlichen Informationen gewonnen, die für die Übertragung der extrahierten elektronischen Postnachricht 1 im zweiten Kommunikationsnetz 200 an den dort adressierten Empfänger 175 und die Identifikation des Senders 125 beim Empfänger 175 erforderlich sind. Für die reine Übertragung der elektronischen Postnachricht 1 an den Empfänger 175 des zweiten Kommunikationsnetzes 200 ist im Bereich 60 von den verwendbaren Datenfeldern nur das Zieladreßdatenfeld 20 unabdingbar. Das Quelladreßdatenfeld 25 und das Namensdatenfeld 35 dienen lediglich der Identifikation des Senders 125 und das Bezeichnungsdatenfeld 30 dient lediglich der Betitelung und damit der Identifikation der elektronischen Postnachricht 1 selbst. Aus der dritten Kopfinformation 13, deren Vorhandensein ebenfalls durch einen entsprechenden Signalisierungseintrag in der zweiten Kopfinformation 12 referenziert wird, kann der zweite Diensteanbieter 150 erkennen, ob die elektronische Postnachricht 1 Teil einer gesamten zu verkettenden elektronischen Postnachricht gehört. Anhand einer weiteren in der Figur 2 nicht dargestellten Kopfinformation, deren Vorhandensein ebenfalls durch einen entsprechenden Signalisierungseintrag in der zweiten Kopfinformation 12 referenziert wird, kann der zweite Diensteanbieter 150 erkennen, an welcher Stelle der zu verkettenden gesamten elektronischen Postnachricht die elektronische Postnachricht 1 der Kurznachricht 5 steht, sofern diese Angabe nicht bereits in der dritten Kopfinformation 13 enthalten ist.

Entsprechend der ermittelten Position der elektronischen Postnachricht 1 in der zu verkettenden gesamten elektronischen Postnachricht kann dann der zweite Diensteanbieter 150 die elektronische Postnachricht 1 der Kurznachricht 5 an der entsprechenden Stelle der zu verkettenden gesamten elektronischen Postnachricht einbauen.

Das erfindungsgemäße Verfahren ist nicht auf den SMS-Kurznachrichtendienst im GSM-Mobilfunknetz begrenzt, sondern für beliebige Kurznachrichtendienste anwendbar, bei denen elektronische Postnachrichten mit Kurznachrichten übertragen werden, wobei es sich bei der elektronischen Postnachricht auch nicht um eine Internet-E-Mail handeln muß.

## Patentansprüche

1. Verfahren zur Übertragung von elektronischen Postnachrichten (1) unter Verwendung eines SMS-Kurznachrichtendienstes, wobei mit einer Kurznachricht (5) des SMS-Kurznachrichtendienstes in einem ersten Kommunikationsnetz (100) eine elektronische Postnachricht (1) sowie Adress- und/oder Identifikationsdaten für die Übertragung der elektronischen Postnachricht (1) in einem zweiten Kommunikationsnetz (200) übertragen werden, wobei mit der Kurznachricht (5) eine Benutzerdatenkopfinformation (11) mit einer Signalisierung des Vorhandenseins mehrerer Datenfelder (20, 25, 30, 35) übertragen wird, die die Adress- und/oder Identifikationsdaten umfassen, wobei eine zweite Kopfinformation (12) mit der Kurznachricht (5) übertragen wird, die auf das Vorhandensein der Benutzerdatenkopfinformation (11) hinweist, **dadurch gekennzeichnet, dass** die mehreren Datenfelder (20, 25, 30, 35) innerhalb eines Datenteils (50) der Kurznachricht (5) außerhalb der Benutzerdatenkopfinformation (11) und der zweiten Kopfinformation (12) übertragen werden und dass die Signalisierung des Vorhandenseins der mehreren Datenfelder mittels eines Identifikators in der Benutzerdatenkopfinformation erfolgt, indem der Identifikator einen Wert angibt, der gemäß einer Zuordnungstabelle einer RFC-822 Adressierung zugeordnet ist, nach der die Adress- und/oder Identifikationsdaten im Datenteil (50) vorliegen.

2. Verfahren nach Anspruch 1, **dadurch gekennzeichnet, daß** das mindestens eine Datenfeld (20, 25, 30, 35) durch ein Schlüsselwort für die Übertragung im Datenteil (50) **gekennzeichnet** wird.

3. Verfahren nach Anspruch 2, **dadurch gekennzeichnet, daß** das Schlüsselwort kodiert übertragen wird.

4. Verfahren nach einem der vorherigen Ansprüche, **dadurch gekennzeichnet, daß** die mehreren Datenfelder (20, 25, 30, 35) im Datenteil (50) der elektronischen Postnachricht (1) unmittelbar vorangestellt übertragen werden.

5. Verfahren nach einem der vorherigen Ansprüche, **dadurch gekennzeichnet, daß** im Datenteil (50) mindestens ein Zieladreßdatenfeld (20) übertragen wird, das eine Zieladresse der elektronischen Postnachricht (1) umfaßt.

6. Verfahren nach einem der vorherigen Ansprüche, **dadurch gekennzeichnet, daß** im Datenteil (50) ein Quelladreßdatenfeld (25) übertragen wird, das die Quelladresse der elektronischen Postnachricht (1) umfaßt.

7. verfahren nach einem der vorherigen Ansprüche, **dadurch gekennzeichnet, daß** im Datenteil (50) ein Bezeichnungsdatenfeld (30) übertragen wird, das eine Bezeichnung der elektronischen Postnachricht (1) umfaßt.

8. Verfahren nach einem der vorherigen Ansprüche, **dadurch gekennzeichnet, daß** im Datenteil (50) ein Namensdatenfeld (35) übertragen wird, das einen Namen des Absenders der elektronischen Postnachricht (1) umfaßt.

9. Verfahren nach einem der vorherigen Ansprüche, **dadurch gekennzeichnet, daß** mindestens eine dritte Kopfinformation (13) mit der Kurznachricht (5) übertragen wird, die die elektronische Postnachricht (1) als Teil einer mittels Übertragung mehrerer Kurznachrichten verketteten gesamten elektronischen Postnachricht (1) kennzeichnet.

10. Verfahren nach einem der vorherigen Ansprüche, **dadurch gekennzeichnet, daß** das Ende der mehreren Datenfelder (20, 25, 30, 35) durch ein Trennungszeichen **gekennzeichnet** wird.

11. Verfahren nach einem der vorherigen Ansprüche, **dadurch gekennzeichnet, daß** mit der Benutzerdatenkopfinformation (11) ein Längendatenfeld (46) übertragen wird, das die Länge der mehreren Datenfelder (20, 25, 30, 35) angibt,

12. Verfahren nach einem der vorherigen Ansprüche, **dadurch gekennzeichnet, daß** die mehreren Datenfelder (20, 25, 30, 35) durch ein Trennungszeichen von der elektronischen Postnachricht (1) getrennt übertragen werden.

## Claims

1. Method for transmission of electronic mail messages (1) using an SMS short message service, with an electronic mail message (1) as well as address and/or identification data for the transmission of the electronic mail message (1) being transmitted in a second communication network (200) with a short message (5) in the SMS short message service in a first communication network (100), with user data header information (11) being transmitted with signalling of the presence of a plurality of data fields (20, 25, 30, 35) which comprise the address and/or identification data being transmitted with the short message (5), with second header information (12) being transmitted with the short message (5), indicating the presence of the user data header information (11), **characterized in that** the plurality of data fields (20, 25, 30, 35) within a data part (50) of the short message (5) are transmitted outside the user data header information (11) and the second header information (12), and **in that** the presence of the plurality of data fields is signalled by means of an identifier in the user data header information by the identifier indicating a value which is allocated in accordance with an allocation table for RFC-822 addressing, and on the basis of which the address and/or identification data is present in the data part (50).

2. Method according to Claim 1, **characterized in that** the at least one data field (20, 25, 30, 35) is **characterized by** a keyword for the transmission in the data part (50).

3. Method according to Claim 2, **characterized in that** the keyword is transmitted in a coded form.

4. Method according to one of the preceding claims, **characterized in that** the plurality of data fields (20, 25, 30, 35) are transmitted right at the start in the data part (50) of the electronic mail message (1).

5. Method according to one of the preceding claims, **characterized in that** at least one destination address data field (20), which comprises a destination address for the electronic mail message (1), is transmitted in the data part (50).

6. Method according to one of the preceding claims, **characterized in that** a source address data field (25), which comprises the source address of the electronic mail message (1), is transmitted in the data part (50).

7. Method according to one of the preceding claims, **characterized in that** a title data field (30) which comprises a title for the electronic mail message (1), is transmitted in the data part (50).

8. Method according to one of the preceding claims, **characterized in that** a name data field (35) which comprises a name of the sender of the electronic mail message (1), is transmitted in the data part (50).

9. Method according to one of the preceding claims, **characterized in that** at least one item of third header information (13) is transmitted with the short message (5) and identifies the electronic mail message (1) as part of an overall electronic mail message (1) which is linked by means of the transmission of a plurality of short messages.

10. Method according to one of the preceding claims, **characterized in that** the end of the plurality of data fields (20, 25, 30, 35) is identified by a separating character.

11. Method according to one of the preceding claims, **characterized in that** a length data field (46), which indicates the length of the plurality of data fields (20, 25, 30, 35) is transmitted with the user data header information (11).

12. Method according to one of the preceding claims, **characterized in that** the plurality of data fields (20, 25, 30, 35) are transmitted separated from the electronic mail message (1) by a separating character.

## Revendications

1. Procédé de transmission de courriers électroniques (1) utilisant un service de messages courts SMS, un courrier électronique (1) ainsi que des données d'adresse et/ou d'identification étant transmis avec un message court (5) du service de messages courts SMS dans un premier réseau de communication (100) pour la transmission du courrier électronique (1) dans un deuxième réseau de communication, une information de l'en-tête des données utilisateur (11) étant transmise avec le message court (5) avec une signalisation de la présence de plusieurs champs des données (20, 25, 30, 35) qui regroupent les données d'adresse et/ou d'identification, une deuxième donnée de l'en-téte (12) étant transmise avec le message court (5) qui indique la présence de l'information de l'en-tête des données utilisateur (11),
**caractérisé en ce que**
les différents champs des données (20, 25, 30, 35) dans une division des données (40) du message court (5) sont transmis en dehors de l'information de l'en-tête des données utilisateur (11) et de la deuxième information de l'en-tête (12), et la signalisation de la présence de plusieurs champs des données se produit à l'aide d'un identificateur dans l'information de l'en-tête des données utilisateur par le fait que l'identificateur indique une valeur associée selon le tableau d'association à un adressage RFC-822 suivant lequel les données d'adresse et/ou d'identification se trouvent dans la division des données (50).

2. Procédé selon la revendication 1,
**caractérisé en ce qu'**
au moins un champ de données (20, 25, 30, 35) est spécifié par un mot clé pour la transmission dans la division des données (50).

3. Procédé selon la revendication 2,
**caractérisé en ce que**
le mot clé est transmis codé.

4. Procédé selon l'une quelconque des revendications précédentes,
**caractérisé en ce que**
les différents champs de données (20, 25, 30, 35) sont transmis directement en étant mis en avant dans la division de données (50) du courrier électronique (1).

5. Procédé selon l'une quelconque des revendications précédentes,
**caractérisé en ce qu'**
au moins un champ de données d'adresse cible (20) comprenant une adresse cible du courrier électronique (1) est transmis dans la division des données (50).

6. Procédé selon l'une quelconque des revendications précédentes,
**caractérisé en ce qu'**
un champ de données d'adresse source (20) comprenant l'adresse source du courrier électronique (1) est transmis dans la division des données (50).

7. Procédé selon l'une quelconque des revendications précédentes,
**caractérisé en ce qu'**
un champ de données de désignation (30) comprenant une désignation du courrier électronique (1) est transmis dans la division des données (50).

8. Procédé selon l'une quelconque des revendications précédentes,
**caractérisé en ce qu'**
un champ de données de nom (35) comprenant un nom de l'expéditeur du courrier électronique (1) est transmis dans la division des données (50).

9. Procédé selon l'une quelconque des revendications précédentes,
**caractérisé en ce qu'**
on transmet avec le message court (5) au moins une troisième information de l'en-tête (13) spécifiée par courrier électronique (1) en tant que partie d'un courrier électronique (1) regroupant plusieurs messages courts enchaînés au moyen de la transmission.

10. Procédé selon l'une quelconque des revendications précédentes,
**caractérisé en ce que**
la fin des différents champs de données (20, 25, 30, 35) est spécifiée par un séparateur.

11. Procédé selon l'une quelconque des revendications précédentes,
**caractérisé en ce qu'**
un champ de données de longueur (46) qui indique la longueur des différents champs de données (20, 25, 30, 35) est transmis avec l'information de l'en-tête des données utilisateur.

12. Procédé selon l'une quelconque des revendications précédentes,
**caractérisé en ce que**
les différents champs de données (20, 25, 30, 35) sont transmis séparés du courrier électronique (1) par un séparateur.
